(19) Europäisches Patentamt / European Patent Office / Office européen des brevets

(11) EP 2 885 346 B1

(12) **EUROPÄISCHE PATENTSCHRIFT**

(45) Veröffentlichungstag und Bekanntmachung des Hinweises auf die Patenterteilung:
**22.06.2016 Patentblatt 2016/25**

(21) Anmeldenummer: **13747404.5**

(22) Anmeldetag: **09.08.2013**

(51) Int Cl.:
***C08K 5/00** (2006.01)* ***C08K 7/28** (2006.01)*

(86) Internationale Anmeldenummer:
**PCT/EP2013/066709**

(87) Internationale Veröffentlichungsnummer:
**WO 2014/029641 (27.02.2014 Gazette 2014/09)**

(54) **LANGFASERVERSTÄRKTE FLAMMGESCHÜTZTE POLYESTER**

LONG FIBRE REINFORCED FLAME-RETARDANT POLYESTERS

POLYESTER IGNIFUGE RENFORCÉ PAR DES FIBRES LONGUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2012 EP 12181019**

(43) Veröffentlichungstag der Anmeldung:
**24.06.2015 Patentblatt 2015/26**

(73) Patentinhaber: **BASF SE**
**67056 Ludwigshafen am Rhein (DE)**

(72) Erfinder:
- **ROTH, Michael**
  **64686 Lautertal (DE)**
- **USKE, Klaus**
  **67098 Bad Dürkheim (DE)**
- **WOLF, Ulli**
  **67551 Worms (DE)**

(74) Vertreter: **BASF IP Association**
**BASF SE**
**ZRX-C6**
**67056 Ludwigshafen (DE)**

(56) Entgegenhaltungen:
**EP-A2- 0 955 333** **WO-A1-2012/016927**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 885 346 B1

## Beschreibung

Die Erfindung betrifft thermoplastische Formmassen, enthaltend

A) 10 bis 93 Gew.-% eines thermoplastischen Polyester
B) 1 bis 20 Gew.-% eines Phosphinsäuresalzes
C) 1 bis 20 Gew.-% eines stickstoffhaltigen Flammschutzmittels
D) 5 bis 50 Gew.-% eines langfaserförmigen Verstärkungsstoffes mit einer Faserlänge von 2 bis 25 mm und einem L/D Verhältnis von 500 bis 4000
E) 0 bis 50 Gew.-% weiterer Zusatzstoffe,

wobei die Summe der Gewichtsprozente der Komponenten A) bis E) 100 % ergibt.

Weiterhin betrifft die Erfindung die Verwendung der thermoplastischen Formmassen zur Herstellung von langfaserverstärkten Granulaten und die hierbei erhältlichen Granulate. Darüber hinaus betrifft die Erfindung die Verwendung derartiger Granulate zur Herstellung von kerbschlagzähen flammgeschützten Formkörpern jeglicher Art und die hierbei erhältlichen Formkörper.

Verfahren zur Herstellung von langfaserverstärkten Formmassen und Granulaten sind beispielsweise aus den EP-A 1788027 und 1788028 sowie 1788029 bekannt.

Insbesondere hat sich zur Herstellung von langfaserverstärkten Thermoplasten (LFT) das sogenannte Pultrusions- oder Strangziehverfahren bewährt. Hierbei wird der endlose Faserstrang (Roving) mit der Polymerschmelze vollständig durchdrängt und anschließend abgekühlt und geschnitten. Das auf dieser Weise hergestellte langfaserverstärkte Stäbchengranulat kann mit den üblichen Verarbeitungsverfahren zu Formteilen weiterverarbeitet werden.

Thermoplastische Polyester werden seit langem als Werkstoffe eingesetzt. Neben ihren mechanischen, thermischen, elektrischen und chemischen Eigenschaften gewinnen zunehmend Eigenschaften wie Flammwidrigkeit und hoher Glühdrahtbeständigkeit an Bedeutung. Beispiele hier sind Anwendungen im Haushaltswarenbereich (z.B. Stecker) und im Elektronikbereich (z.B. Abdeckungen für Schutzschalter).
Darüber hinaus besteht ein zunehmendes Marktinteresse an halogenfrei flammgeschützten thermoplastischen Polyestern. Hier sind die wesentlichen Anforderungen an das Flammschutzmittel eine helle Eigenfarbe, eine ausreichende Temperaturstabilität während der Polymerverarbeitung, sowie eine flammhemmende Wirksamkeit in verstärktem und unverstärktem Polymer.

Die Wirksamkeit von halogenfreien Flammschutzadditivmischungen, bestehend aus Phosphinaten und stickstoffhaltigen Synergisten bzw. Umsetzungsprodukten von Melamin mit Phosphorsäure (Melaminpolyphosphat) wird im Wesentlichen durch Brandprüfungen nach UL94-V beschrieben, s. EPA 142 3260, EP-A 1084181.

Für bestimmte Anwendungen von flammgeschützten Polyesterformmassen im Haushaltsgerätebereich ist jedoch vornehmlich der Glühdrahttest nach IEC 60695-2-13 von Bedeutung, der von vielen halogenfrei flammgeschützten Polyesterformmassen - wie beispielsweise in EP-A 162 6066 und WO 2005/121232 beschrieben - nicht erfüllt wird.

Aufgabe der vorliegenden Erfindung war es daher, ausgehend vom zuvor beschriebenen Stand der Technik, halogenfrei flammgeschützte Polyesterformmassen mit hoher Flammwidrigkeit und hoher Glühdrahtbeständigkeit bereitzustellen.
Überraschenderweise wurde nun gefunden, dass langglasfaserverstärkte, halogenfrei flammgeschützte Polyesterformmassen auf Basis von Phosphinaten und stickstoffhaltigen Synergisten die geforderten Eigenschaften bei zusätzlich verbesserter Kerbschlagzähigkeit erfüllen.

Demgemäß wurden die eingangs definierten Formmassen gefunden. Bevorzugte Ausführungsformen sind den Unteransprüchen zu entnehmen.

Als Komponente (A) enthalten die erfindungsgemäßen Formmassen 10 bis 93, bevorzugt 35 bis 93 und insbesondere 35 bis 89 Gew.-% mindestens eines thermoplastischen Polyesters.

Allgemein werden Polyester A) auf Basis von aromatischen Dicarbonsäuren und einer aliphatischen oder aromatischen Dihydroxyverbindung verwendet.
Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder

deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im Allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im Allgemeinen:

1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

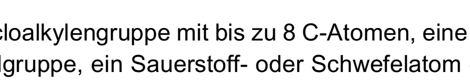

,

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch $C_1$-$C_6$-Alkyl- oder Alkoxygruppen und Fluor, Chlor oder Brom als Substituenten tragen.

Als Stammkörper dieser Verbindungen seinen beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im Allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel

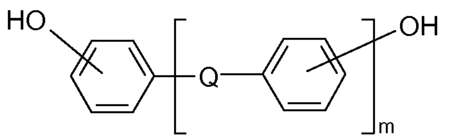

worin Q eine Einfachbindung, eine $C_1$- bis $C_8$-Alkylen-, eine $C_2$- bis $C_3$-Alkyliden-, eine $C_3$- bis $C_6$-Cycloalkylidengruppe, eine $C_6$- bis $C_{12}$-Arylengruppe sowie -O-, -S- oder $-SO_2-$ bedeutet und m eine ganze Zahl von 0 bis 2 ist.

Die Diphenole können an den Phenylenresten auch Substituenten haben wie $C_1$- bis $C_6$-Alkyl oder $C_1$- bis $C_6$-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten

Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente B) enthalten die erfindungsgemäßen Formmassen 1 bis 20, vorzugsweise 1 bis 15 und insbesondere 5 bis 15 Gew.-%, bezogen auf A) bis E) eines Phosphinsäuresalzes.

Als Komponente B) eignen sich Phosphinsäuresalze der Formel (I) oder/und Diphosphinsäuresalze der Formel (II) oder deren Polymere

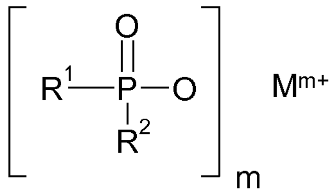

(I)

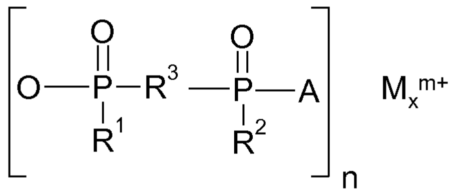

(II)

worin

| | |
|---|---|
| $R^1$, $R^2$ | gleich oder verschieden sind und Wasserstoff, $C_1$-$C_6$-Alkyl, linear oder verzweigt und/oder Aryl; |
| $R^3$ | $C_1$-$C_{10}$-Alkylen, linear oder verzweigt, $C_6$-$C_{10}$-Arylen, -Alkylarylen oder -Arylalkylen; |
| M | Mg, Ca, Al, Sb, Sn, Ge, Ti, Zn, Fe, Zr, Ce, Bi, Sr, Mn, Li, Na, K und/oder eine protonierte Stickstoffbase; |
| m | 1 bis 4; n 1 bis 4; x 1 bis 4 bedeuten, vorzugsweise m = 3, x = 3. |

Bevorzugt sind $R^1$, $R^2$ der Komponente B gleich oder verschieden und bedeuten Methyl, Ethyl, n-Propyl, Iso-Propyl, n-Butyl, tert.-Butyl, n-Pentyl und/oder Phenyl.

Bevorzugt bedeutet $R^3$ der Komponente B Methylen, Ethylen, n-Propylen, Iso-Propylen, n-Butylen, tert.-Butylen, n-Pentylen, n-Octylen oder n-Dodecylen, Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Besonders bevorzugt ist $R^1$, $R^2$ Wasserstoff, Methyl, Ethyl und M = Al, wobei Al-hypophosphit besonders bevorzugt ist.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder -sulfids als Trägermaterials (Weißpigmente, wie z.B. $TiO_2$, $SnO_2$, ZnO, ZnS, $SiO_2$) gefällt werden. Man erhält somit oberflächenmodifizierte Pigmente, die als lasermarkierbare Flammschutzmittel für thermoplastische Polyester verwendet werden können.

Als Komponente C) enthalten die erfindungsgemäßen Formmassen 1 bis 20, vorzugsweise 1 bis 15 und insbesondere 5 bis 15 Gew.-% eines stickstoffhaltigen Flammschutzmittels, vorzugsweise einer Melaminverbindung.

Das gemäß der Erfindung (Komponente C) bevorzugt geeignete Melamincyanurat ist ein Reaktionsprodukt aus vorzugsweise äquimolaren Mengen von Melamin (Formel I) und Cyanursäure bzw. Isocyanursäure (Formeln Ia und Ib)

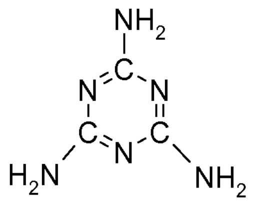

(I)

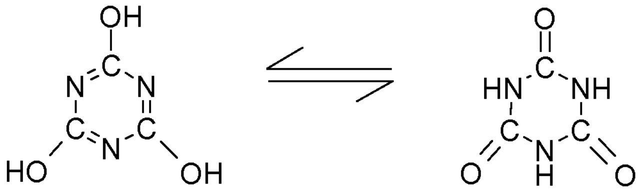

(Ia)
Enolform

(Ib)
Ketoform

Man erhält es z.B. durch Umsetzung von wässrigen Lösungen der Ausgangsverbindungen bei 90 bis 100°C. Das im Handel erhältliche Produkt ist ein weißes Pulver mit einer mittleren Korngröße $d_{50}$ von 1,5 - 7 $\mu$m und einem $d_{99}$ Wert kleiner 50$\mu$m.

Weitere geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).

Bevorzugt sind Melaminpolyphosphatsalze einer 1,3,5-Triazinverbindung, deren Zahl n des durchschnittlichen Kondensationsgrades zwischen 20 und 200 liegt und der 1,3,5-Triazingehalt 1,1 bis 2,0 mol einer 1,3,5-Triazinverbindung, ausgewählt aus der Gruppe, bestehend aus Melamin, Melam, Melem, Melon, Ammelin, Ammelid, 2-Ureidomelamin, Acetoguanamin, Benzoguanamin und Diaminphenyltriazin, pro Mol Phosphoratom beträgt. Bevorzugt beträgt der n-Wert solcher Salze im allgemeinen zwischen 40 und 150 und das Verhältnis einer 1,3,5-Triazinverbindung pro Mol Phosphoratom vorzugsweise zwischen 1,2 und 1,8. Des weiteren wird der pH einer 10 gew.-%igen wässrigen Aufschlämmung von Salzen, hergestellt gemäß EP-B1095030 im allgemeinen mehr als 4,5 und vorzugsweise mindestens 5,0, betragen. Der pH-Wert wird üblicherweise bestimmt, indem 25 g des Salzes und 225 g sauberes Wasser von 25°C in einen 300-ml-Becher gegeben werden, die resultierende wäßrige Aufschlammung für 30 Minuten gerührt und dann der pH gemessen wird. Der o.g. n-Wert, der zahlenmittlere Kondensationsgrad, kann mittels 31 P-Feststoff-NMR bestimmt werden. Aus J. R. van Wazer, C. F. Callis, J. Shoolery und R. Jones, J. Am. Chem. Soc., 78, 5715, 1956, ist bekannt, dass die Anzahl benachbarter Phosphatgruppen eine einzigartige, chemische Verschiebung' angibt, die die klare Unterscheidung zwischen Orthophosphaten, Pyrophosphaten und Polyphosphaten ermöglicht. In EP1095030B1 is außerdem ein Verfahren zur Herstellung des gewünschten Polyphosphatsalzes einer 1,3,5-Triazinverbindung, die einen n-Wert von 20 bis 200 aufweist und deren 1,3,5- Triazingehalt 1,1 bis 2,0 mol einer 1,3,5- Triazinverbindung betragt, beschrieben. Dieses Verfahren umfaßt die Umwandlung einer 1,3,5-Triazinverbindung mit Orthophosphorsaure in ihr Orthophosphatsalz, gefolgt von Dehydratisierung und Warmebehandlung, um das Orthophosphatsalz in ein Polyphosphat der 1,3,5-Triazinverbindung umzuwandeln. Diese Wärmebehandlung wird vorzugsweise bei einer Temperatur von mindestens 300°C, und vorzugsweise bei mindestens 310°C, durchgeführt. Zusätzlich zu Orthophosphaten von 1,3,5-Triazinverbindungen können ebenso andere 1,3,5-Triazinphosphate verwendet werden, einschließlich beispielsweise ein Gemisch aus Orthophosphaten und Pyrophosphaten.

Geeignete Guanidinsalze sind

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat $(NH_4PO_3)_n$ mit n ca. 200 bis 1000 bevorzugt 600 bis 800, und Tris(hydroxyethyl)isocyanurat (THEIC) der Formel IV

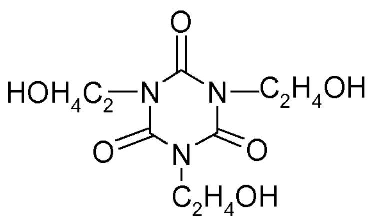

IV

oder dessen Umsetzungsprodukte mit aromatischen Carbonsäuren $Ar(COOH)_m$, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der
EP-A 584 567.

Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere $(NH_4PO_3)_n$ oder Melaminpyrophosphat oder polymeres Melaminphosphat eingesetzt. Das Mischungsverhältnis z.B. von $(NH_4PO_3)_n$ zu THEIC beträgt vorzugsweise 90 bis 50 zu 10 bis 50, insbesondere 80 bis 50 zu 50 bis 20 Gew.-%, bezogen auf die Mischung derartiger Komponenten B1).

Weiterhin geeignet sind Benzoguanamin-Verbindungen der Formel V

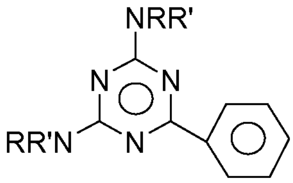

(V),

in der R,R’ geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel VI

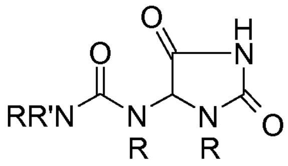

(VI)

wobei R,R’ die in Formel V angegebene Bedeutung haben sowie deren Salze mit Phosphorsäure, Borsäure und/oder Pyrophosphorsäure sowie Glycolurile der Formel VII oder dessen Salze mit den o.g. Säuren

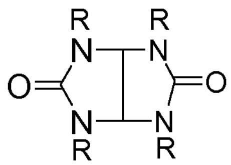

(VII)

in der R die in Formel V genannte Bedeutung hat.

Geeignete Produkte sind im Handel oder gemäß DE-A 196 14 424 erhältlich.

Das gemäß der Erfindung verwendbare Cyanguanidin (Formel VIII) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

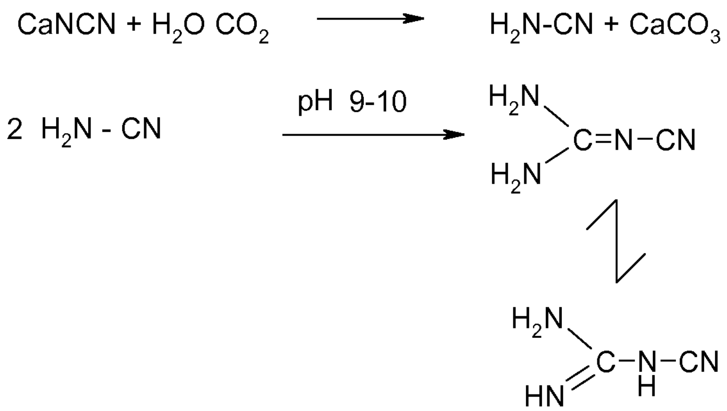


VIII

Das im Handel erhältliche Produkt ist ein weißes Pulver mit einem Schmelzpunkt von 209°C bis 211°C.

Bevorzugt beträgt das Verhältnis der Komponenten B) zu C) 1 : 1 bis 5 : 1, insbesondere 1:1.5 bis 1:2.5.

Ganz besonders bevorzugt wird erfindungsgemäß Melamincyanurat eingesetzt, dessen Teilchengrößenverteilung beträgt:

$$d_{98} < 25\ \mu m, \text{ bevorzugt } < 20\ \mu m$$

$d_{50}$ < 4,5 µm, bevorzugt < 3 µm.

Unter einem $d_{50}$-Wert versteht der Fachmann in der Regel den Teilchengrößenwert, bei welchem 50 % der Teilchen eine kleinere Teilchengröße aufweisen und 50 % eine größere Teilchengröße aufweisen.

Die Teilchengrößenverteilung wird üblicherweise durch Laserbeugung bestimmt (analog ISO 13320).

Die langfaserförmigen Füllstoffe D) werden in Mengen von 5 bis 50 Gew.-%, insbesondere 5 bis 40 Gew.-%, eingesetzt, welche eine Faserlänge von 2 bis 25 mm, vorzugsweise von 3 bis 15 mm aufweisen und ein L/D (Länge/Durchmesser)-Verhältnis von 500 bis 4000 aufweisen, insbesondere 500 bis 2000 und ganz besonders 500 bis 700.

Als bevorzugte faserförmige Füllstoffe seien Kohlenstofffasern, Aramid-Fasern, Glasfasern und Kaliumtitanat-Fasern genannt, wobei Glasfasern als E-Glas besonders bevorzugt sind. Diese werden als Rovings in den handelsüblichen Formen eingesetzt.

Die erfindungsgemäß als Roving eingesetzten Glasfasern weisen einen Durchmesser von 6 bis 20 µm, bevorzugt von 10 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.
Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X\text{-}(CH_2)_n)_k\text{-}Si\text{-}(O\text{-}C_mH_{2m+1})_{4-k}$$

in der die Substituenten folgende Bedeutung haben:

X $NH_2$-,

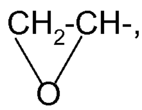 HO-,

- n eine ganze Zahl von 2 bis 10, bevorzugt 3 bis 4
- m eine ganze Zahl von 1 bis 5, bevorzugt 1 bis 2
- k eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf D) zur Oberflächenbeschichtung eingesetzt.

Andere geeignete Beschichtungsmittel (auch Schlichte genannt) basieren auf Isocyanaten, Phenolharzen oder Acrylsäurederivaten.

Die erfindungsgemäßen thermoplastischen Formmassen können darüber hinaus als Komponente E) weitere Zusatzstoffe enthalten, welche verschieden von A) bis D) sind.

Als Komponente E) können die erfindungsgemäßen Formmassen von insgesamt 0 bis 50, insbesondere bis zu 30 Gew.-% weiterer Zusatzstoffe und Verarbeitungshilfsmittel enthalten bezogen auf die Gesamtmenge der Komponenten A) bis E).

Die thermoplastischen Formmassen enthalten vorteilhafterweise ein Schmiermittel. Als Komponente E) können die erfindungsgemäßen Formmassen von 0 bis 3, bevorzugt von 0,05 bis 3, vorzugsweise von 0,1 bis 1,5 und insbesondere von 0,1 bis 1 Gew.-% eines Schmiermittels bezogen auf die Gesamtmenge der Komponenten A) bis E) enthalten. Bevorzugt sind Al-, Alkali-, Erdalkalisalze oder Ester- oder Amide von Fettsäuren mit 10 bis 44 C-Atomen, vorzugsweise mit 14 bis 44 C-Atomen. Die Metallionen sind vorzugsweise Erdalkali und Al, wobei Ca oder Mg besonders bevorzugt sind. Bevorzugte Metallsalze sind Ca-Stearat und Ca-Montanat sowie Al-Stearat. Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als weitere Komponente E) können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher und Kautschuke usw. enthalten.

Als Beispiele für Oxidationsverzögerer und Wärmestabilisatoren seien Phosphite, sterisch gehinderte Phenole und weitere Amine (z. B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Als Komponente E) können die erfindungsgemäßen thermoplastischen Formmassen 0,01 bis 2 Gew.-%, bevorzugt 0,05 bis 1,5 Gew.-%, besonders bevorzugt 0,1 bis 1,5 Gew.-% mindestens eines Wärmestabilisators, jeweils bezogen auf das Gesamtgewicht der Komponenten A) bis E).

Die erfindungsgemäßen Polyesterformmassen können durch die bekannten Verfahren zur Herstellung von langfaserverstärktem Stäbchengranulat hergestellt werden, insbesondere durch Pultrusionsverfahren, bei denen der endlose vorgeheizte Faserstrang (Roving) mit konstanter Geschwindigkeit durch die Polymerschmelze gezogen und dabei vollständig mit der Polymerschmelze durchtränkt und anschließend abgekühlt und geschnitten wird. Das auf diese Art und Weise erhaltene langfaserverstärkte Stäbchengranulat, das bevorzugt eine Granulatlänge von 2 bis 25 mm, Insbesondere von 5 bis 14 mm aufweist, kann mit den üblichen Verarbeitungsverfahren (wie z. B. Spritzgießen, Pressen) zu Formteilen weiterverarbeitet werden.

Das bevorzugte L/D-Verhältnis des Granulates beträgt nach Pultrusion 2 bis 8, insbesondere 3 bis 4,5.

Der aus erfindungsgemäßen Formmassen hergestellte Polymerstrang kann mit allen bekannten Granulierungsverfahren zu Granulat verarbeitet werden, wie z. B. durch Stranggranulierung, bei der der Strang in einem Wasserbad abgekühlt und anschließend geschnitten wird.

Besonders gute Eigenschaften können beim Formteil mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass Schnecken mit großem Durchmesser und tiefem Kompressionsverhältnis, insbesondere kleiner 2, und großzügig dimensionierte Düsen- und Angusskanäle bevorzugt zum Einsatz kommen. Ergänzend muss dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug, E-Modul, der Reißfestigkeit und der Kerbschlagzähigkeit erreicht.

Nach der Formteilverarbeitung z.B. durch Spritzguss beträgt die Faserlänge üblicherweise 0,05 bis 10 mm, insbesondere 0.4 bis 2 mm.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Die Schlagzähigkeit, insbesondere die Kerb-Schlagzähigkeit der erfindungsgemäßen Formteile ist deutlich höher, wobei gleichzeitig ein effektiver Flammschutz und Glühdrahtbeständigkeit gegeben sind.

Verarbeitungsverfahren

Neben den üblichen Verarbeitungsverfahren, wie Extrusion oder Spritzguss kommen auch folgende Verarbeitungsverfahren in Frage:

- CoBi-Injektion oder Montagespritzguss für Hybridteile, bei denen die erfindungsgemäße Polyesterformmasse mit anderen kompatiblen oder inkompatiblen Werkstoffen, wie z.B. Thermoplasten, Duroplasten oder Elastomeren kombiniert wird.

- Insertteile, wie z.B. Lagerstellen oder Gewindeeinsätze aus der erfindungsgemäßen Polyesterformmasse, umspritzt mit anderen kompatiblen oder inkompatiblen Werkstoffen, wie z.B. Thermoplasten, Duroplasten oder Elastomeren.

- Outsertteile, wie Rahmen, Gehäuse oder Stützen aus der erfindungsgemäßen Polyesterformmasse, in welche Funktionselemente aus anderen kompatiblen oderinkompatiblen Werkstoffen, wie z.B. Thermoplasten, Duroplasten oder Elastomeren eingespritzt werden.

- Hybridteile (Elemente aus der erfindungsgemäßen Polyesterformmasse kombiniert mit anderen kompatiblen oder inkompatiblen Werkstoffen, wie z.B. Thermoplasten, Duroplasten oder Elastomeren) hergestellt durch Verbundspritzguss, Spritzschweißen. Montagespritzguss, Ultraschall-, Reib- oder Laserschweißen, Kleben, Börteln oder Nieten.

- Halbzeuge und Profile (z.B. hergestellt durch Extrusion, Pultrusion, Schichtung oder Lamination).

- Oberflächenbeschichtung, Kaschierungen, chemisches- oder physikalisches Metallisieren, Beflockung, wobei die erfindungsgemäße Polyesterformmasse das Substrat selbst oder der Substratträger oder bei Hybrid/Bi-Injektionsteilen ein definierter Substratbereich sein kann, welcher auch durch nachträgliche chemische (z.B. Ätzen) oder physikalische Behandlung (z.B. spanabhebend oder LASER-Abtrag) zur Oberfläche gebracht werden kann.

- Bedrucken, Transferdruck, 3-D Druck, Laserbeschriften.

Beispiele:

Es wurden folgende Komponenten verwendet:

Komponente A: Ultradur® B2550 der Firma BASF SE (PBT mit einer Viskositätszahl nach DIN 53728 von 110 $cm^3/g$)

Komponente B: Aluminiumhypophosphit (ex Firma Italmatch Chemicals)

Komponente C: Melamincyanurat einer mittleren Teilchengröße $d_{50}$ von -2.6 μm (Melapur®MC 25 der BASF SE, $d_{98}$ < 25 μm).

Komponente D/1: Glasfaserroving mit 2400Tex (Firma 3B) und einem Durchmesser von 17 μm (Tex ≙ g/km Glasfaser).

Komponente D/2: Kurzglasfaser PPG 3786 (PPG) und einem Durchmesser von 10 μm und einer mittleren Faserlänge von 4,5 mm.

Komponente E/1: Luwax®OA5 (BASF SE) Polyolefinwachs

Komponente E/2: Pentaerythrittetrastearat

Die Formmassen wurden wie folgt hergestellt:

1) Kurzfaserverstärkte Granulate mittels Extrusion und Spritzguß:

Die einzelnen Komponenten wurden hierzu in einem Zweiwellenextruder ZSK 26 (Fa. Berstorff) bei einem Durchsatz von 20 kg/h und ca. 240 - 270°C bei flachem Temperaturprafil gemischt, als Strang ausgetragen, bis zur Granulierfähigkeit abgekühlt und granuliert. Die Prüfkörper für die in Tabelle 1 aufgeführten Untersu-

chungen wurden auf einer Spritzgießmaschine des Typs Arburg 420C bei einer Massetemperatur von ca. 260° C und einer Werkzeugtemperatur von ca. 80°C verspritzt.

2) Langfaserverstärkte Granulate mittels Pultrusionsverfahren und Spritzguß:

Die einzelnen Komponenten A - C und E) wurden in einem seitlich angebrachten Zweischneckenextruder bei 240 °C gemischt und mit einem Massestrom von 26 kg/h über einen Übergang in die 255 °C heiße Imprägnierkammer gefüllt. Die auf 220 °C vorgeheizten Rovings wurden vorgespannt, damit sich die einzelnen Glasfasern nicht berühren und mit einer konstanter Geschwindigkeit von 6 bis 10 m/min durch die Polymerschmelze gezogen und dabei vollständig mit der Polymerschmelze durchtränkt und anschließend auf ca. Raumtemperatur abgekühlt und in ca. 12 mm lange Stäbchen geschnitten. Das auf diese Art und Weise erhaltene langfaserverstärkte Stäbchengranulat wies ein L/D Verhältnis von ca. 700 auf.

Die Prüfkörper für die in Tabelle 1 angeführten Untersuchungen wurden auf einer Spritzgießmaschine des Typs Arburg 420C bei einer Massetemperatur von ca. 260° C und einer Werkzeugtemperatur von ca. 80°C verspritzt Die Prüfkörper für die Spannungstests wurden nach ISO 527-2:/1993 und die Prüfkörper für die Schlagzähigkeitsmessungen nach ISO 179-2/1 eA hergestellt.

Die Flammwidrigkeit der Formmassen wurde zum einen nach der Methode UL94V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit wurde gemäß der Glühdrahtentzündlichkeitsprüfung GWIT (Glow-Wire-Ignition-Temperature) nach DIN EN 60695-2-13 und der GWFI (Glow Wire Flammability Index) nach DIN EN 60695-2-12 bestimmt. Bei der GWIT-Prüfung wird an 3 Prüfkörpern (beispielsweise an Platten der Geometrie 60 x 60 x 1,5 mm) mit Hilfe eines glühenden Drahtes bei Temperaturen zwischen 550 und 960°C die maximale Temperatur ermittelt, die in 3 aufeinander folgenden Tests auch während der Einwirkzeit des Glühdrahtes nicht zur Entzündung führt. Die angegebene Glühdrahtentzündungstemperatur liegt 25K über der maximal ermittelten Temperatur. Als Kriterium der Entzündung gilt dabei eine Flamme mit Brennzeiten >5 sec.

Zusammensetzungen der Formmassen und die Ergebnisse der Messungen sind der Tabelle zu entnehmen.

| Komponenten [Gew.-%] | Vergleichsbeispiel | Erfindungsgemäßes Beispiel 1 |
|---|---|---|
| A | 54.2 | 54.2 |
| B | 12.6 | 12.6 |
| C | 7.4 | 7.4 |
| D/1 | - | 25 |
| D/2 | 25 | - |
| E/1 + E/2 | 0.3+0.5 | 0.3+0.5 |
| Zug E-Modul [MPa] | 10000 | 10800 |
| Bruchspannung [MPa] | 110 | 130 |
| Kerbschlagzähigkeit [kJ/m$^2$] | 6.6 | 16.6 |
| UL94 (1.6 mm) | V-0 | V-0 |
| GWFI 960°C / 1.5mm | erfüllt | erfüllt |
| GWIT 775°C/1.5mm | nicht erfüllt | erfüllt |
| GWIT max / 1.5mm | 650° C | 775° C |

Anhand der Daten der Tabelle geht hervor, dass die erfindungsgemäße Zusammensetzung gegenüber dem Stand der Technik eine sehr viel bessere Glühdrahtbeständigkeit aufweist (GWIT 775°C erfüllt). Darüber hinaus zeigt sich, dass die erfindungsgemäße Zusammensetzung gleichzeitig eine weitaus bessere Kerbschlagzähigkeit besitzt.

**Patentansprüche**

1. Thermoplastische Formmassen, enthaltend

A) 10 bis 93 Gew.-% eines thermoplastischen Polyester
B) 1 bis 20 Gew.-% eines Phosphinsäuresalzes
C) 1 bis 20 Gew.-% eines stickstoffhaltigen Flammschutzmittels
D) 5 bis 50 Gew.-% eines langfaserförmigen Verstärkungsstoffes mit einer Faserlänge von 2 bis 25 mm und einem L/D Verhältnis von 500 bis 4000
E) 0 bis 50 Gew.-% weiterer Zusatzstoffe,
wobei die Summe der Gewichtsprozente der Komponenten A) bis E) 100 % ergibt.

2. Thermoplastische Formmassen nach Anspruch 1, enthaltend als Komponente A) ein Polyalkylenterephthalat.

3. Thermoplastische Formmassen nach den Ansprüchen 1 oder 2, in denen das Verhältnis von B) zu C) 1:1 bis 5:1 beträgt.

4. Thermoplastische Formmassen nach den Ansprüchen 1 bis 3, in denen die Komponente C) einen Teilchengrößenverteilungswert $d_{98}$ < 25 $\mu$m aufweist.

5. Verwendung der thermoplastischen Formmassen gemäß den Ansprüchen 1 bis 4 zur Herstellung von langfaserverstärkten Granulaten.

6. Verwendung nach Anspruch 5, wobei die Herstellung von langfaserverstärkten Granulaten via Pultrusion erfolgt.

7. Langfaserverstärkte Granulate erhältlich aus den thermoplastischen Formmassen gemäß den Ansprüchen 1 bis 4.

8. Verwendung der Granulate gemäß Anspruch 7 zur Herstellung von flammgeschützten, glühdrahtbeständigen Formkörpern jeglicher Art.

9. Formkörper erhältlich aus den Granulaten gemäß Anspruch 7.

**Claims**

1. A thermoplastic molding composition comprising

A) from 10 to 93% by weight of a thermoplastic polyester
B) from 1 to 20% by weight of a phosphinic salt
C) from 1 to 20% by weight of a nitrogen-containing flame retardant
D) from 5 to 50% by weight of a long-fiber reinforcing material with fiber length from 2 to 25 mm and L/D ratio from 500 to 4000
E) from 0 to 50% by weight of other additives,
where the total of the percentages by weight of components A) to E) is 100%.

2. The thermoplastic molding composition according to claim 1, comprising a polyalkylene terephthalate as component A).

3. The thermoplastic molding composition according to claim 1 or 2, in which the ratio of B) to C) is from 1:1 to 5:1.

4. The thermoplastic molding composition according to claims 1 to 3, in which the particle size distribution value $d_{98}$ of component C) is < 25 $\mu$m.

5. The use of the thermoplastic molding composition according to claims 1 to 4 for producing long-fiber-reinforced pelletized materials.

6. The use according to claim 5, where long-fiber-reinforced pelletized materials are produced via pultrusion.

7. A long-fiber-reinforced pelletized material obtainable from the thermoplastic molding compositions according to claims 1 to 4.

8. The use of the pelletized materials according to claim 7 for producing flame-retardant, glow-wire-resistant moldings of any type.

9. A molding obtainable from the pelletized materials according to claim 7.

## Revendications

1. Masses moulées thermoplastiques, contenant :

   A) 10 à 93 % en poids d'un polyester thermoplastique
   B) 1 à 20 % en poids d'un sel d'acide phosphinique
   C) 1 à 20 % en poids d'un agent ignifuge contenant de l'azote
   D) 5 à 50 % en poids d'une matière de renforcement sous forme de fibres longues avec une longueur de fibre de 2 à 25 mm et un rapport L/1 de 500 à 4000
   E) 0 à 50 % en poids d'autres additifs,

   la somme des pourcentages en poids des composants A) à E) constituant 100 %.

2. Masses moulées thermoplastiques selon la revendication 1, contenant, en tant que composant A), du polyalkylènetéréphtalate.

3. Masses moulées thermoplastiques selon les revendications 1 ou 2, dans lesquelles le rapport de B) à C) est de 1:1 à 5:1.

4. Masses moulées thermoplastiques selon les revendications 1 à 3, dans lesquelles le composant C) présente une granulométrie $d_{98} < 25\ \mu m$.

5. Utilisation des masses moulées thermoplastiques selon les revendications 1 à 4 pour la fabrication de granulés renforcés par des fibres longues.

6. Utilisation selon la revendication 5, dans laquelle la fabrication de granulés renforcés par des fibres longues s'effectue par pultrusion.

7. Granulés renforcés par des fibres longues obtenus à partir des masses moulées thermoplastiques selon les revendications 1 à 4.

8. Utilisation des granulés selon la revendication 7 pour la fabrication de corps moulés ignifuges de tous types résistant aux filaments incandescents.

9. Corps moulés pouvant être obtenus à partir des granulés selon la revendication 7.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1788027 A
- EP 1788028 A
- EP 1788029 A
- EP 1423260 A
- EP 1084181 A
- EP 1626066 A
- WO 2005121232 A
- DE 4401055 A
- US 3651014 A
- DE 3334782 A
- DE 2842005 A
- DE 3506472 A
- EP 711810 A
- EP 365916 A
- EP 1095030 B
- EP 1095030 B1
- EP 584567 A
- DE 19614424 A


### In der Beschreibung aufgeführte Nicht-Patentliteratur


- **AUS J. R. VAN WAZER ; C. F. CALLIS ; J. SHOOLERY ; R. JONES.** *J. Am. Chem. Soc.,* 1956, vol. 78, 5715
- Test for Flammability of Plastic Materials for Parts in Devices and Appliances. Underwriters Laboratories Inc. Standard of Safety, 1998, 14-18